(19) Europäisches Patentamt
European Patent Office
Office européen des brevets

(11) EP 0 678 748 B1

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int Cl.[7]: **G01P 3/68**

(21) Anmeldenummer: **95104344.7**

(22) Anmeldetag: **24.03.1995**

(54) **Verfahren zur Messung der Geschwindigkeit eines Partikelstromes**

Method for measuring the speed of a stream of particles

Procédé de mesure de la vitesse d'un courant de particules

(84) Benannte Vertragsstaaten:
**CH DE FR GB LI NL**

(30) Priorität: **12.04.1994 DE 4412494**

(43) Veröffentlichungstag der Anmeldung:
**25.10.1995 Patentblatt 1995/43**

(73) Patentinhaber: **Kugelstrahlzentrum Aachen GmbH**
**D-52134 Herzogenrath (DE)**

(72) Erfinder: **Linnemann, Wolfgang, Dipl. Phys.**
**D-52068 Aachen (DE)**

(74) Vertreter: **Bauer, Dirk, Dipl.-Ing. Dipl.-Kfm.**
**Bauer & Bauer,**
**Patentanwälte,**
**Am Keilbusch 4**
**52080 Aachen (DE)**

(56) Entgegenhaltungen:

| | |
|---|---|
| **EP-A- 0 100 304** | **EP-A- 0 302 431** |
| **DE-A- 3 106 530** | **US-A- 4 873 855** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Messung der Geschwindigkeit eines Partikelstromes mit den im Oberbegriff des Patentanspruchs angegebenen Merkmalen.

In der EP 0 302 431 A2 sind ein Verfahren und eine Vorrichtung offenbart, mit dem bzw. der die Geschwindigkeit eines Flugzeugs relativ zur Umgebung, das heißt zur Atmosphäre bestimmt werden kann. Zu diesem Zweck wird von einer im bewegten Flugzeug befindlichen Lichtquelle Licht imitiert, welches von den Atmosphärenpartikeln reflektiert und von zwei Detektoren im Flugzeug wieder empfangen wird. Durch eine proportional zur Amplitude und zur Signaldauer vorgenommene Signalgewichtung werden nur die Signale zur Geschwindigkeitsmessung herangezogen, die an den größten Atmosphärenteilchen reflektiert werden. Mit diesem bekannten Verfahren wird also die Relativgeschwindigkeit des Flugzeugs zu Partikeln einer bestimmten Größe ermittelt. Dabei ist es nicht möglich, gleichzeitig die unter Umständen voneinander abweichenden Geschwindigkeiten unterschiedlich großer Partikel zu bestimmen. Da eine derartige Notwendigkeit bei einem Verfahren zur Geschwindigkeitsbestimmung beim Kugelstrahlen besteht, ist das aus der EP 0 302 431 bekannte Verfahren für eine derartige Anwendung unbrauchbar.

Nach einem anderen bekannten Verfahren wird ein kleines Meßvolumen mit einem Lichtstrahl ausgeleuchtet. Durchquert ein Strahlpartikel dieses Volumen, so wird das Licht auf zwei Schlitze unterschiedlicher Breite reflektiert, die einen definierten Abstand voneinander aufweisen. Die von einem den Schlitzen zugeordneten optischen Detektor empfangene Signalfolge weist nur dann ein bestimmtes Hell-zu-Dunkel-zu-Hell-Verhältnis auf, wenn die Lichtsignalfolge von einem einzigen Strahlpartikel herrührt. In diesem Falle ist die Dauer der von dem optischen Detektor empfangenen Lichtsignalfolge umgekehrt proportional zur Geschwindigkeit des Strahlpartikels.

Ein wesentlicher Nachteil dieses bekannten Meßverfahrens resultiert aus der verhältnismäßig aufwendigen Analyse der entstehenden charakteristischen Signale.

Aus der US 4,873,855 ist auch bereits ein Verfahren zur Messung der Geschwindigkeit von Kugelstrahlen bekannt, wobei eine Meßspule verwendet wird, die unterhalb einer als Beschleunigungsdüse ausgebildeten Beschleunigungseinrichtung installiert ist. Die Induktivität dieser Meßspule ist abhängig von der Dichte der Strahlmittelverteilung im Meßvolumen, die sich ihrerseits bei gegebenem Strahlmittelfluß umgekehrt proportional zur Strahlmittelgeschwindigkeit im Meßvolumen verhält. Durch Messung der Induktivität der Spule und gleichzeitiger Messung des Strahlmittelflusses wird auf die Geschwindigkeit des Strahlmittels geschlossen. Dieses bekannte Meßverfahren läßt sich nur bei ferromagnetischen Strahlmitteln anwenden.

Zum Verfestigen und Umformen von Bauteilen hat sich das Kugelstrahlverfahren bewährt. Dabei werden Strahlpartikel beschleunigt auf das Bauteil geschossen, wodurch eine dünne, dem Kugelstrahl zugewandte Oberflächenschicht plastifiziert und gereckt wird. Hierdurch werden Eigenspannungen im Bauteilquerschnitt induziert, welche sich positiv auf die Materialeigenschaften auswirken. Beim Kugelstrahlumformen wird die Strahlmittelintensität so groß gewählt, daß zusätzlich eine makroskopische ein- oder zweidimensionale Krümmung des Bauteils entsteht.

Bei gegebener Strahlpartikelgröße übt die Geschwindigkeit der Strahlmittel in allen mechanischen Strahlverfahren einen wesentlichen Einfluß auf das Umformergebnis aus. Es besteht daher ein großes Interesse, über ein einfach durchzuführendes Geschwindigkeitsmeßverfahren zu verfügen.

Der Erfindung liegt die Aufgabe zugrunde, ein derartiges Meßverfahren vorzuschlagen, das sich bei sämtlichen Strahlmitteln anwenden läßt und eine einfache Analyse der zur Geschwindigkeitsermittlung erforderlichen Signale erlaubt.

Zur Lösung dieser Aufgabe wird von einem Verfahren der im Oberbegriff des Anspruchs 1 angegebenen Art ausgegangen und erfindungsgemäß vorgeschlagen, nach den im kennzeichnenden Teil des Anspruchs 1 angegebenen Merkmalen zu verfahren.

Nach dem erfindungsgemäßen Verfahren wird also die Strahlmittelgeschwindigkeit bestimmt, indem die Zeit, die ein Strahlpartikel benötigt, um eine definierte Strecke ds zu durchlaufen gemessen wird. Hierzu werden zwei Lichtstrahlen in einem definierten Abstand auf Partikel des Strahlmittelstromes gerichtet und entweder die transmittierenden oder die reflektierenden Signale mit einem optischen Detektor als Funktion der Zeit aufgenommen. Liegen kleine Strahlmittelströme vor, so befinden sich in der Regel nur einzelne Strahlpartikel im Meßaufbau. Durchlaufen diese Partikel den ersten Lichtstrahl, so wird ein charakteristisches Signal vom optischen Detektor registriert, welches um ein Zeitintervall dt verschoben auch von der zweiten Meßstelle erfaßt wird, wie dies in Fig. 1 dargestellt ist. Aus der bekannten Strecke ds zwischen den beiden Lichtstrahlen und der gemessenen Zeit dt läßt sich die Geschwindigkeit v angeben mit

$$v = \frac{ds}{dt}$$

Bei einem realen Meßvorgang befindet sich zu einem Zeitpunkt eine große Anzahl von Partikeln zwischen den beiden Meßstellen, so daß an dem ersten und dem zweiten Lichtstrahl in der Meßzeit dt eine Folge von Signalen registriert wird, wie dies Fig. 2 veranschaulicht. Eine eindeutige Zuordnung der an den Meßstellen registrierten Signale ist somit nicht mehr möglich.

Durch das erfindungsgemäße Verfahren kann die Geschwindigkeit des Strahlmittels mit Hilfe einer statischen Interpretation aus den gemessenen Signalfolgen abgeleitet werden. Die hierfür notwendigen Voraussetzungen:

- die Anzahl N der in einem Meßintervall registrierten Partikel ist stets viel größer als 1,
- die Bewegungen der einzelnen Partikel sind stets unabhängig voneinander,

sind beim Kugelstrahlen immer erfüllt.

Wird das Passieren eines Partikels am ersten Lichtstrahl als Startsignal der Messung am zweiten Lichtstrahl verwendet, so könnte jedes der an dem zweiten Lichtstrahl erfaßten Signale von dem Partikel, der das Startsignal zur Messung gegeben hat, erzeugt worden sein, wie Fig. 3 verdeutlicht. Im Ausführungsbeispiel gibt es jedoch nur ein Signalpaar, das von ein und demselben Partikel erzeugt wurde, wie in Fig. 3 fett hervorgehoben markiert ist. Zur Online-Messung der Partikelgeschwindigkeit wird zunächst jedem Zeitintervall $dt_i$ eine Geschwindigkeit gemäß

$$v_i = \frac{ds}{dt_i}$$

zugeordnet.

Nur die Zeitdifferenz zwischen den fett hervorgehobenen Signalen liefert die korrekte Geschwindigkeit des betreffenden Partikels. Mit den vorliegenden Meßsignalen kann zu diesem Zeitpunkt also noch nicht entschieden werden, welche der berechneten Geschwindigkeiten die reale Geschwindigkeit eines Partikels widerspiegelt.

Wird die Messung k-mal wiederholt, so wird mit dem Verfahren die korrekte Geschwindigkeit k-mal registriert, während die sich zufällig ergebenden Geschwindigkeiten, die im folgenden mit "Background-Geschwindigkeiten" bezeichnet werden, sich über den gesamten Geschwindigkeitsbereich

$$\frac{ds}{\Delta T} = v_{min} \leq v_i \leq v_{max} = \frac{ds}{dt}$$

verteilen, wobei dt das kleinste Meßintervall ist.

Wie Fig. 4 zeigt ergibt sich nach diesem Verfahren ein Häufungspunkt bei der korrekten Strahlmittelgeschwindigkeit v.

Zur endgültigen Bestimmung der Strahlmittelgeschwindigkeitsverteilung wird von der ermittelten Summenverteilung (Summe aus realer Geschwindigkeitsverteilung + Background-Geschwindigkeitsverteilung) die Background-Geschwindigkeitsverteilung abgezogen, worauf die daraus resultierende Differenzverteilung die reale Geschwindigkeitsverteilung des Strahlmittels ergibt.

Zur Berechnung der Background-Geschwindigkeitsverteilung wird folgender Weg beschritten:

Die Messung beginnt zum Zeitpunkt $t = t_0$ und die Meßzeit ist durch $\Delta T$ gegeben. In dieser Zeit durchlaufen N Partikel, die unabhängig voneinander in Bewegung sind, die Lichtstrahlen. Dabei ist die Wahrscheinlichkeitsdichte im Zeitintervall t + dt ein Signal zu registrieren durch

$$\frac{dp(t)}{dt} = \frac{1}{N} \frac{N}{\Delta T} = \text{const}$$

gegeben, woraus sich durch Substitution von

$$v = \frac{s}{t}$$

die Wahrscheinlichkeitsdichte im Intervall v + dv ein Signal zu erfassen direkt ableiten läßt:

$$\frac{dp(v)}{dv} = - \frac{s}{\Delta T} \frac{1}{v^2}.$$

Die Substitutionsgröße v entspricht der Geschwindigkeit eines Partikels, welcher zum Zeitpunkt t = 0 den ersten Lichtstrahl passiert, die Strecke s durchläuft und zum Zeitpunkt t an dem zweiten Lichtstrahl registriert wird.

Die Integration der Wahrscheinlichkeitsdichte in den Grenzen ($v_1$, $v_2$) liefert die Wahrscheinlichkeit p, daß ein Strahlpartikel eine Geschwindigkeit im Geschwindigkeitsintervall ($v_1$, $v_2$) besitzt.

$$p(v_1, v_2) = -\int_{v_1}^{v_2} dv \frac{s}{\Delta T} \frac{1}{v^2} = \frac{s}{\Delta T} \left( \frac{1}{v_1} - \frac{1}{v_2} \right)$$

mit

$$\frac{s}{\Delta T} \leq v_1 < v_2 \leq \frac{s}{dt}$$

In Fig. 5 ist diese theoretische Background-Geschwindigkeitsverteilung im Vergleich mit der experimentell ermittelten Verteilung dargestellt. Die gute Übereinstimmung zwischen den Verteilungen zeigt, daß die oben angegebene Wahrscheinlichkeitsverteilung der Background-Geschwindigkeitsverteilung entspricht.

Die reale Geschwindigkeitsverteilung des Strahlmittels während eines Kugelstrahlprozesses ist nicht bekannt. Um zu testen, inwieweit das erfindungsgemäße Online-Meßverfahren die tatsächliche Geschwindigkeits verteilung widergibt, läßt sich eine Simulation von Signalfolgen analog zu Fig. 3 durchführen.

Dies geschieht, indem jeder der N Kugeln eine Geschwindigkeit zugeordnet wird, welche mit einem Zufallsgenerator generiert wurde. Jede dieser Kugeln verursacht an einem zufällig ausgewählten Zeitpunkt ein Signal an einer ersten Lichtschranke und anschließend, der Kugelgeschwindigkeit entsprechend ein weiteres Signal an der zweiten Lichtschranke.

Diese vom Zufallsgenerator erzeugten Geschwindigkeitsverteilungen sind im einzelnen:

a) Geschwindigkeitsverteilung mit fest vorgegebener Geschwindigkeit (δ-Funktion)

$$p(v) = \begin{cases} 1: & v_k = v_0 \\ 0: & v_k \neq v_0 \end{cases}$$

mit : $v_0$ = 14 m/s und $v_0$ = 20 m/s

b) Gaußverteilung

$$p(v) = \frac{1}{\sqrt{2\pi}\sigma_v} \exp - \frac{1}{2} \frac{(v - v_0)^2}{{\sigma_v}^2}$$

mit:
$v_0$ = 14 m/s und $v_0$ = 20 m/s und
$\sigma_v$ = 1 m/s und 2 m/s und 3 m/s.

Im Anschluß daran wird das oben beschriebene Meßverfahren auf die simulierte Signalfolge angewandt und die "reale" Geschwindigkeitsverteilung ermittelt. Arbeitet das erfindungsgemäße Meßverfahren zuverlässig, so muß es die simulierte Strahlmittelgeschwindigkeitsverteilung reproduzieren.

In den Fig. 6 bis 13 sind die vorgegebenen Verteilungen mit den ermittelten Verteilungen verglichen. Unabhängig von der vorgegebenen mittleren Geschwindigkeit sowie der Art der gewählten Strahlmittelgeschwindigkeitsverteilung zeigt sich eine gute Übereinstimmung zwischen den einzelnen Verteilungen. Die durch das Geschwindigkeitsmeßverfahren bestimmten Strahlmittelgeschwindigkeitsverteilungen besitzen im Vergleich zu den vorgegebenen Verteilungen generell eine kleinere Breite bzw. Standardabweichung. Die maximale relative Abweichung von der vor-

gegebenen Standardabweichung $\sigma_v$ ist in jedem Falle kleiner als 5 %. Gleichermaßen gut stimmen die mit dem Meßverfahren ermittelten Geschwindigkeitserwartungswerte mit den vorgegebenen mittleren Geschwindigkeiten überein, wozu auf Fig. 14 verwiesen wird.

Da die simulierten Zufallsgeschwindigkeitsverteilungen und die realen Geschwindigkeitsverteilungen sich nur wenig voneinander unterscheiden, zeigen die Ergebnisse der Simulation, daß mit dem erfindungsgemäßen Verfahren die Strahlmittelgeschwindigkeit während einer Kugelstrahlumformung einfach und ohne einen größeren Rechenaufwand bestimmt werden kann.

Das erfindungsgemäße Verfahren wurde auf einer 7-Achsen-CNC-gesteuerten Kugelstrahlanlage erprobt. Mit einer solchen Anlage können Stahlkugeln mit einem Durchmesser von 4 mm bis 10 mm beschleunigt werden. Strahlmitteldosierungen der 8 mm Kugeln von 5 bis 30 kg/min liefern in einem Meßintervall von ca. 1 sec. 100 bis 1.000 Signale. Mit abnehmender Kugelgröße nimmt die Anzahl der beschleunigten Stahlkugeln bei gleicher Dosierung schnell zu, wodurch selbst für kleinste Meßintervalle ($\Delta T << 1$ s) eine ausreichend große Anzahl von Signalen erfaßt und somit eine zuverlässige Geschwindigkeitsmessung durchgeführt werden kann, wie Fig. 15 veranschaulicht.

Zur Geschwindigkeitsmessung wurde vorausgesetzt, daß die Anzahl der im Meßintervall registrierten Kugeln sehr viel größer als 1 ist. Soll eine Geschwindigkeitsmessung mit Stahlkugeln von 4 bis 10 mm durchgeführt werden, so muß nahezu jede einzelne Kugel von den Meßstellen erfaßt werden. Um dies zu gewährleisten, sind an einem Düsenausgang eines Injektor-Gravitationsstrahlsystems je zwei Meßeinrichtungen im Abstand ds installiert, die jeweils aus mehreren, mit NAND-Gattern verknüpften Lichtschranken bestehen.

Obschon zur Bestimmung der Strahlmittelgeschwindigkeit von einer geradlinigen, parallel zur Verbindungslinie der Lichtschranken gerichteten Bewegung des Strahlmittels ausgegangen wurde, besitzt das Strahlmittel im allgemeinen eine senkrecht zur Strahlrichtung ausgerichtete Geschwindigkeitskomponente. Hiervon abhängig ist die von den Kugeln zwischen den Lichtschranken tatsächlich zurückgelegte Strecke ds' und damit die experimentell erfaßte Geschwindigkeit $v_2$ gemäß Fig. 16.

Unter der Annahme eines verschwindend kleinen Lichtstrahldurchmessers einer Lichtschranke ist der resultierende relative Fehler abhängig vom Abstand ds der einzelnen Lichtschranken sowie vom Kugeldurchmesser $d_k$ gleich:

$$\frac{v_2 - v_1}{v_1} = \frac{1}{1 \pm \frac{d_k}{2ds}} - 1 \approx + \frac{d_k}{2ds}.$$

In dieser Gleichung bezeichnet $v_2$ die experimentell ermittelte und $v_1$ die tatsächliche Geschwindigkeit der Stahlkugel.

Besitzen die Lichtschranken einen endlichen Durchmesser $d_{Str}$, der in der Größenordnung des Durchmessers der Stahlkugel liegt und ist zusätzlich die Intensität des Lichtstrahls so groß, daß die Detektoren nur dann ansprechen, wenn der Lichtstrahl durch eine Kugel vollständig verdeckt ist, so kann die Geschwindigkeitsmessung mit einer größeren Genauigkeit durchgeführt werden:

$$\frac{v_2 - v_1}{v_1} \approx \frac{1}{1 \pm \frac{d_k - d_{Str}}{2ds}} - 1 \approx \mp \frac{d_k - d_{Str}}{2ds}.$$

Durch die gezielte Wahl des Lichtstrahldurchmessers in Abhängigkeit vom eingesetzten Strahlmittel kann der auftretende Fehler minimiert werden.

Schließlich zeigt Fig. 17 die Abhängigkeit der Strahlmittelgeschwindigkeit vom eingestellten Strahldruck und Strahlmittelfluß. Deutlich ist zu erkennen, daß die Kugelgeschwindigkeit $v_K$ stark abhängig ist von den gewählten Kugelstrahlparametern, nämlich Beschleunigungsdruck und Massefluß.

## Patentansprüche

1. Verfahren zur Messung der Geschwindigkeit eines Partikelstromes, dessen einzelne Partikel sich unabhängig voneinander in einer im wesentlichen gleichen Richtung bewegen, wobei mindestens ein Teilstrom der Partikel an mindestens zwei in einem definierten Abstand in Strömungsrichtung aufeinanderfolgenden Meßstellen jeweils einem Lichtstrahl ausgesetzt wird, dessen reflektiertes oder transmittiertes Licht an der jeweiligen Meßstelle eine Lichtsignalfolge auslöst und als Funktion der Zeit detektiert wird, und die an beiden Meßstellen detektierten Signale registriert werden, dadurch gekennzeichnet, daß aus den Zeitdifferenzen zwischen einem Signal der ersten und einer Vielzahl von Signalen der zweiten Meßstelle sowie dem Abstand beider Meßstellen voneinander wiederholt Geschwindigkeiten ermittelt werden, die eine Summengeschwindigkeitsverteilung ergeben, von der die durch die Wahrscheinlichkeitsdichte $dp(v)/dv= -s/\Delta T \bullet 1/v^2$ festgelegte Background-Geschwindigkeitsverteilung subtrahiert wird, so daß sich die reale Geschwindigkeitsverteilung der Partikel ergibt, wobei in der Gleichung für die Wahrscheinlichkeitsdichte die Größen wie folgt definiert sind:

s = Abstand der Meßstellen;

$\Delta T$ = Meßzeit, in der die Partikel die lichtstrahlen durchlaufen ;

v = Geschwindigkeit.

## Claims

**1.** A method of measuring the velocity of a stream of particles, the individual particles of which move independently of each other in a substantially identical direction, wherein at least a partial stream of the particles is exposed to a light beam in each of at least two measuring locations which are disposed in succession at a defined spacing in the direction of flow, the reflected or transmitted light from which light beams triggers an optical signal sequence at the respective measuring location which is detected as a function of time, and the signals detected at the two measuring locations are recorded, characterised in that velocities are repeatedly determined from the time differences between a signal from the first measuring location and a multiplicity of signals from the second measuring location and from the spacing between the two measuring locations, which velocities result in a cumulative velocity distribution from which the background velocity distribution is subtracted which is determined by the probability density $dp(v)/dv = -s/\Delta T.1/v^2$, so that the real velocity of the particles is obtained, wherein the quantities in the equation for the probability density are defined as follows:

s = spacing between the measuring locations;

$\Delta T$ = time of measurement over which the particles pass through the light beams; and

v = velocity.

## Revendications

**1.** Procédé de mesure de la vitesse d'un courant de particules dont les particules individuelles se déplacent indépendamment les unes des autres dans une direction sensiblement identique, au moins un courant partiel des particules étant soumis en au moins deux points de mesure qui se suivent dans le sens d'écoulement à une distance définie chaque fois à un faisceau lumineux dont la lumière réfléchie ou transmise déclenche sur le point de mesure associé une séquence de signaux lumineux et est détectée comme fonction du temps, et les signaux détectés aux deux points de mesure étant enregistrés, caractérisé en ce qu'on détermine à partir des différences de temps entre un signal du premier point de mesure et une multiplicité de signaux du deuxième point de mesure ainsi qu'à partir de la distance entre les deux points de mesure, de manière réitérée l'une de l'autre, des vitesses qui donnent une répartition de vitesse somme dont on soustrait la répartition de vitesse background fixée par la densité de probabilité $dp(v)/dv = -s/\Delta d \bullet 1/v^2$, si bien que l'on obtient la répartition réelle de vitesse des particules, les valeurs étant définies comme suit dans l'équation pour la densité de probabilité :

s = distance entre les points de mesure ;

$\Delta T$ = temps de mesure pendant lequel les particules passent dans les faisceaux lumineux ;

v = vitesse.

Fig. 1

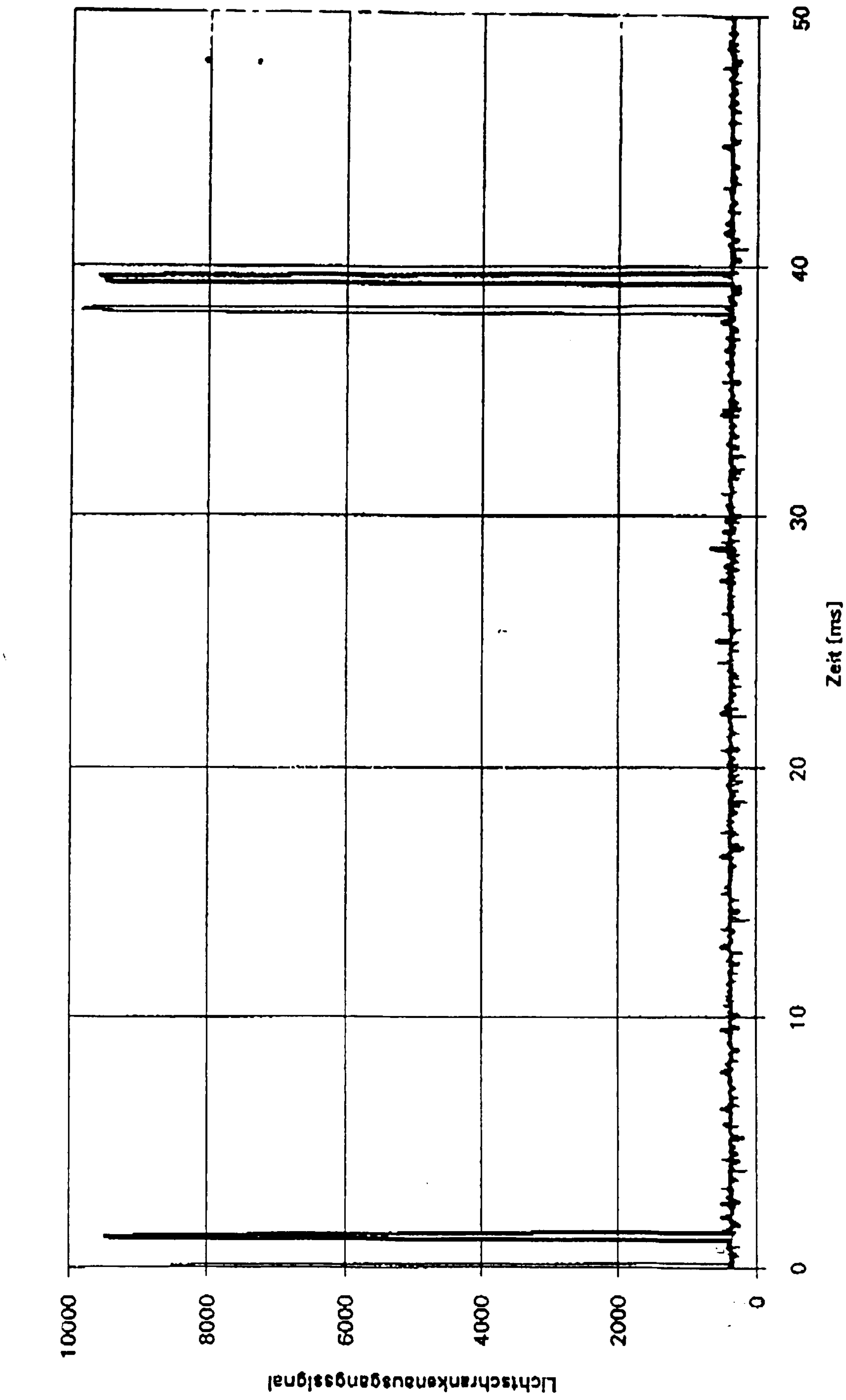
Lichtschrankenausgangssignal
10000
8000
6000
4000
2000
0
10
20
30
40
50
Zeit [ms]

Fig. 2

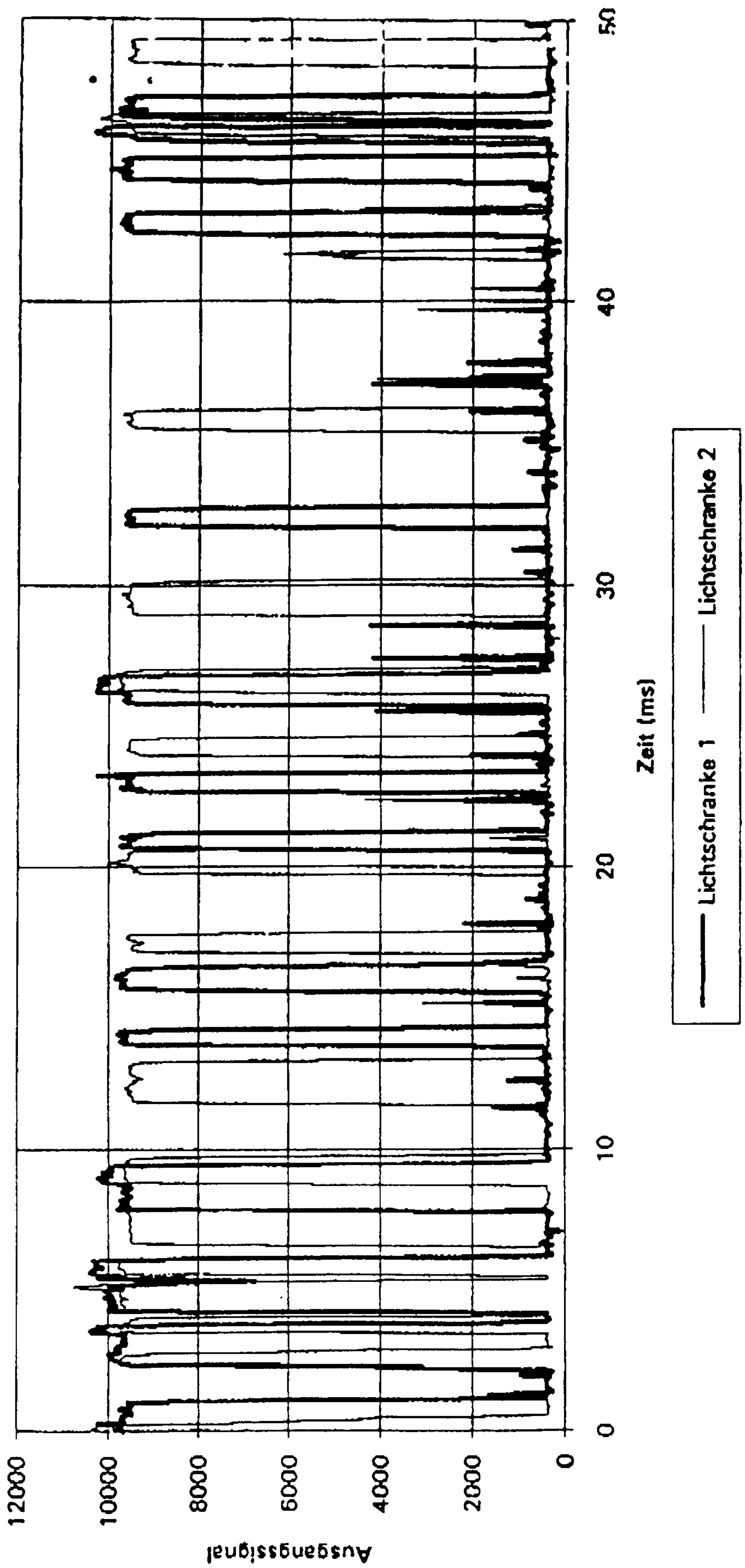
Ausgangssignal
12000
10000
8000
6000
4000
2000
0
0
10
20
30
40
50
Zeit (ms)
Lichtschranke 1
Lichtschranke 2

Fig. 3

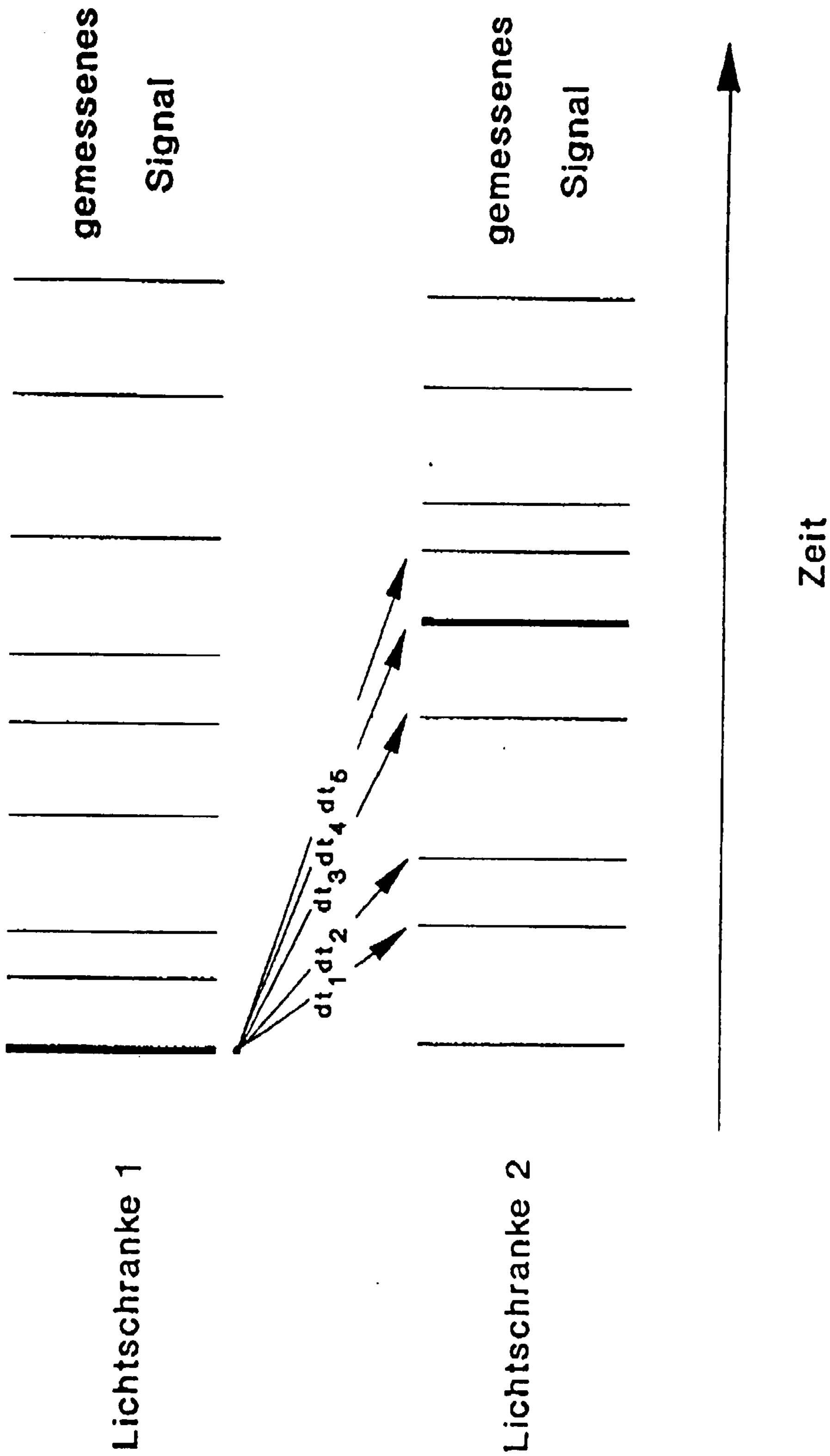

gemessenes Signal
gemessenes Signal
Zeit
$dt_1$ $dt_2$ $dt_3$ $dt_4$ $dt_5$
Lichtschranke 1
Lichtschranke 2

Fig. 4

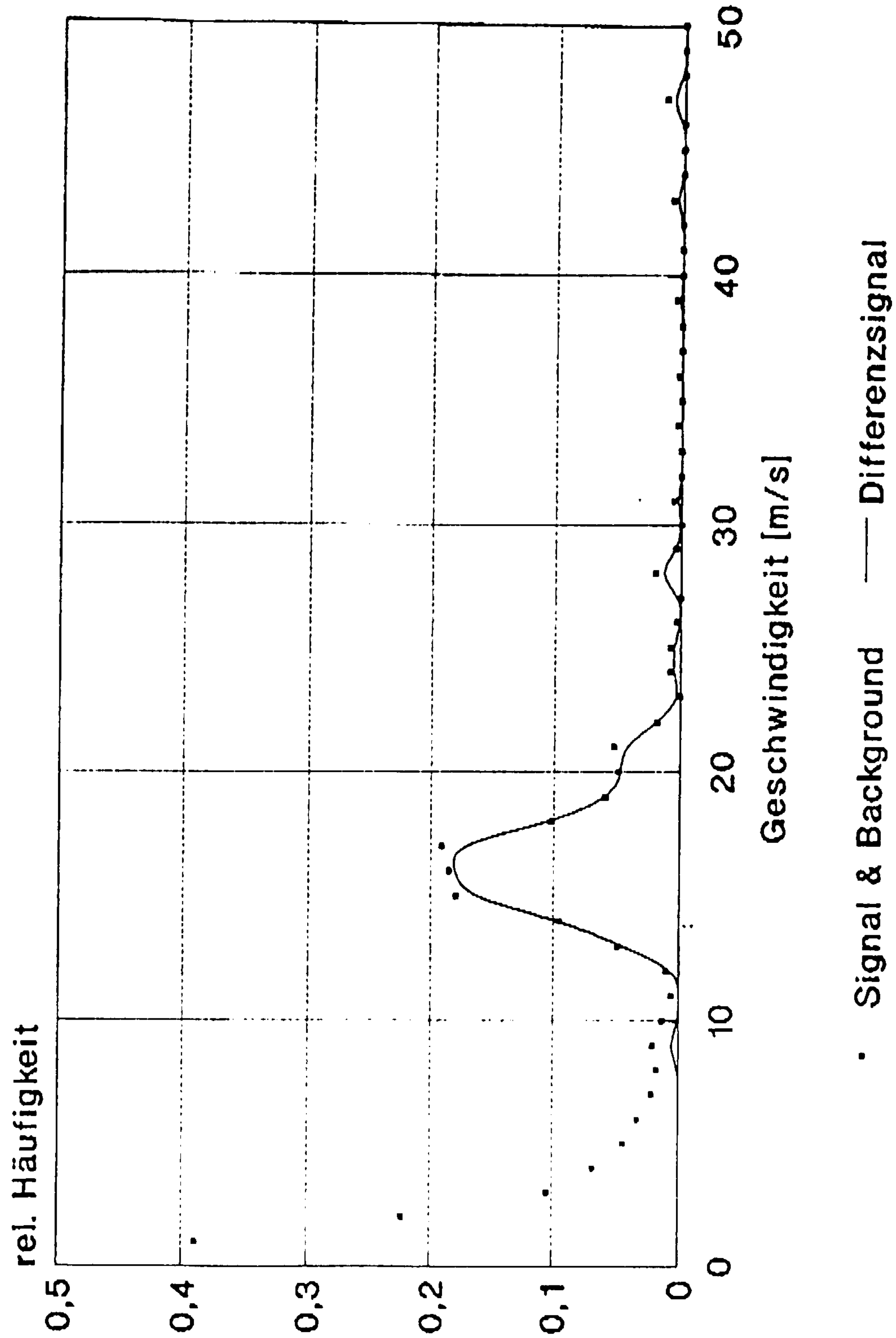

rel. Häufigkeit
0,5
0,4
0,3
0,2
0,1
0
0
10
20
30
40
50
Geschwindigkeit [m/s]
Signal & Background
Differenzsignal

Fig. 5

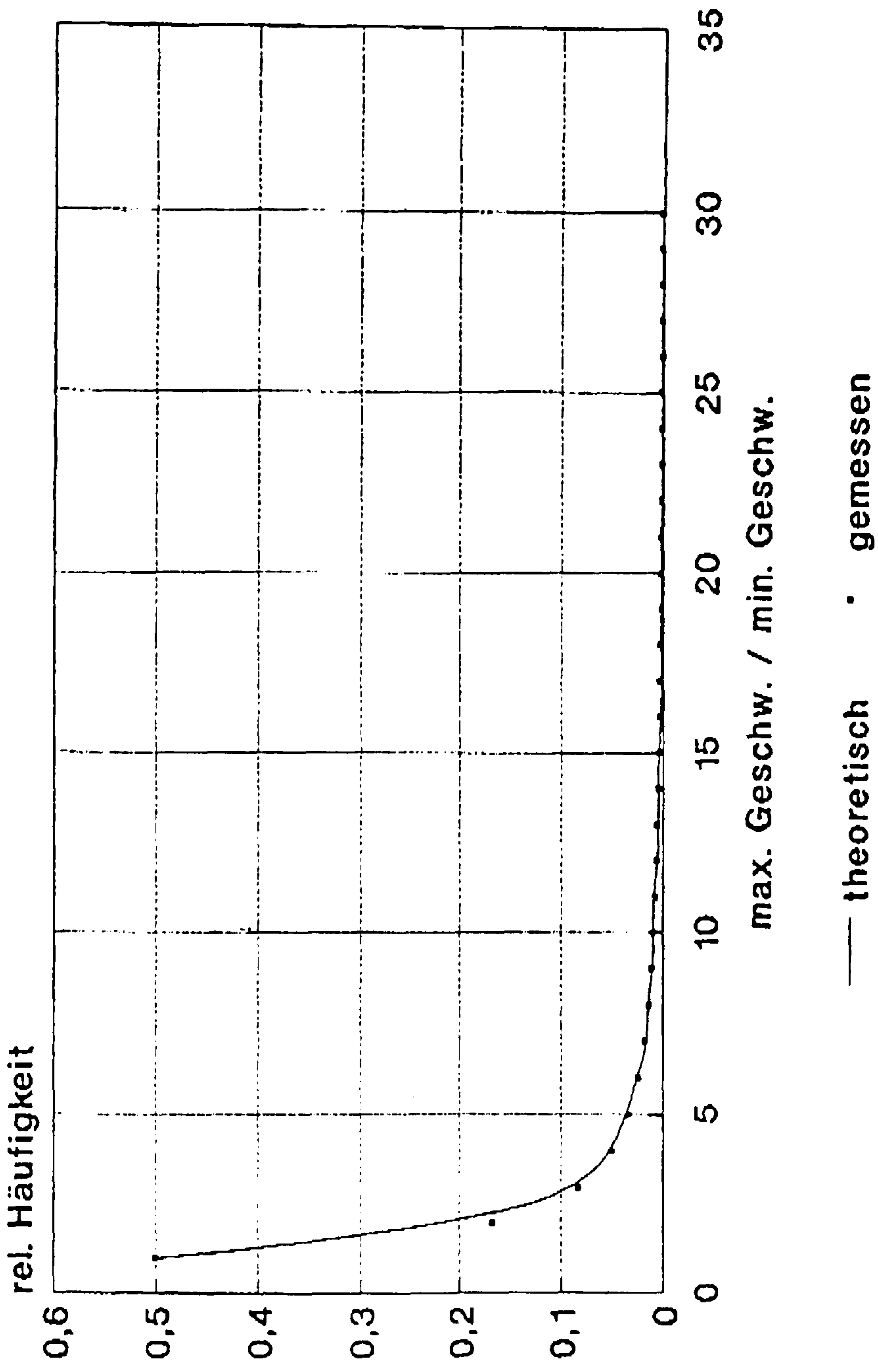
rel. Häufigkeit
0,6
0,5
0,4
0,3
0,2
0,1
0
0
5
10
15
20
25
30
35
max. Geschw. / min. Geschw.
— theoretisch
• gemessen

Fig. 6

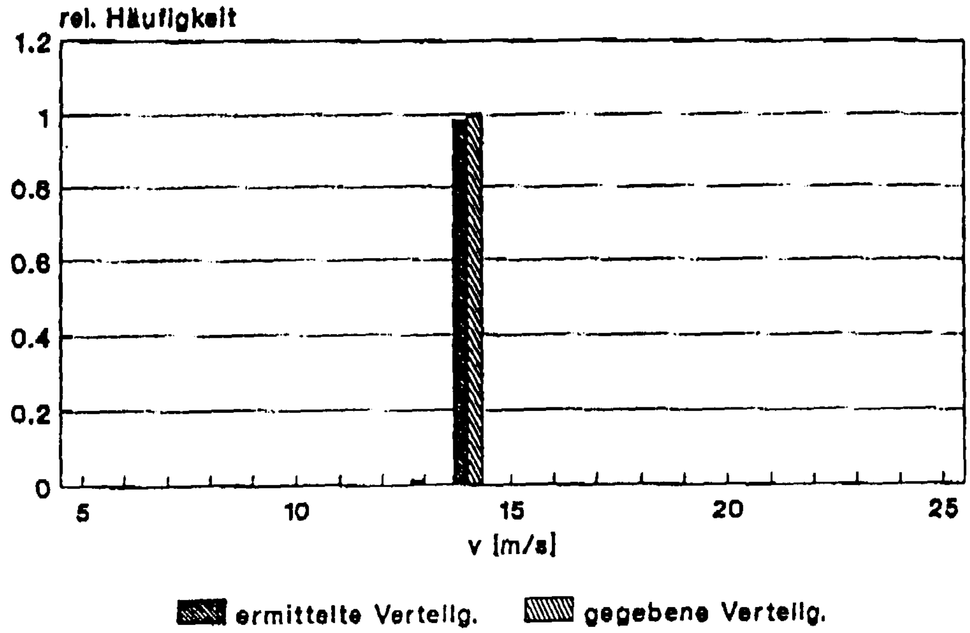
rel. Häufigkeit
1.2
1
0.8
0.6
0.4
0.2
0
5
10
15
20
25
v [m/s]
ermittelte Verteilg.
gegebene Verteilg.

Fig. 7

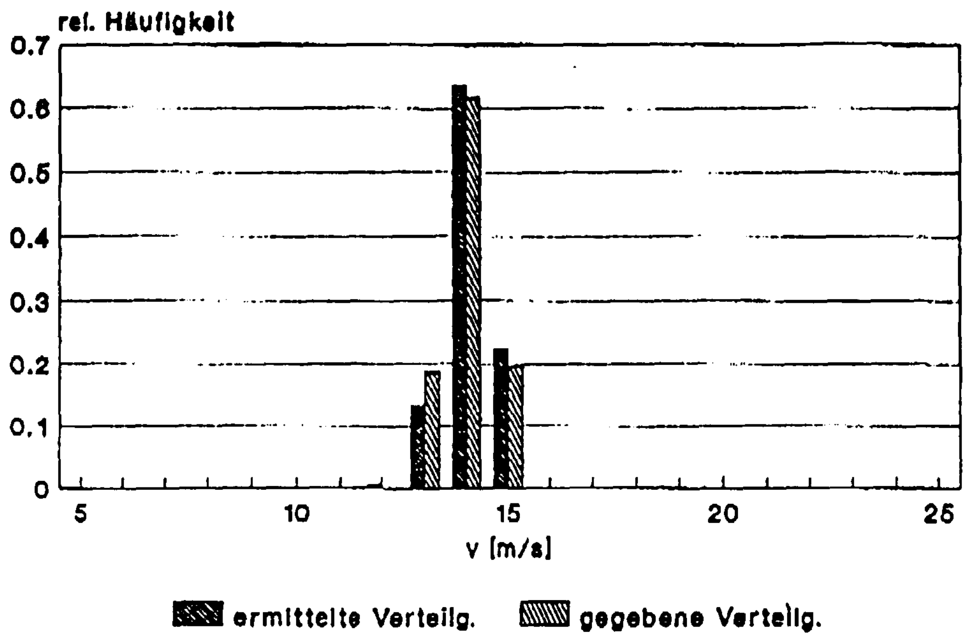
rel. Häufigkeit
0.7
0.6
0.5
0.4
0.3
0.2
0.1
0
5
10
15
20
25
v [m/s]
ermittelte Verteilg.
gegebene Verteilg.

Fig. 8

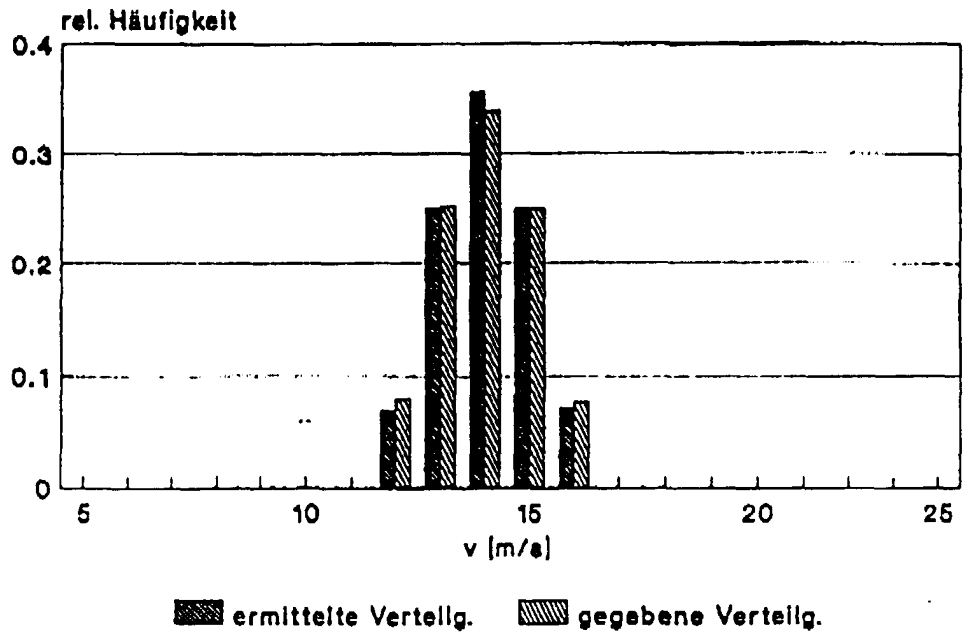
rel. Häufigkeit
0.4
0.3
0.2
0.1
0
5
10
15
20
25
v [m/s]
ermittelte Verteilg.
gegebene Verteilg.

Fig. 9

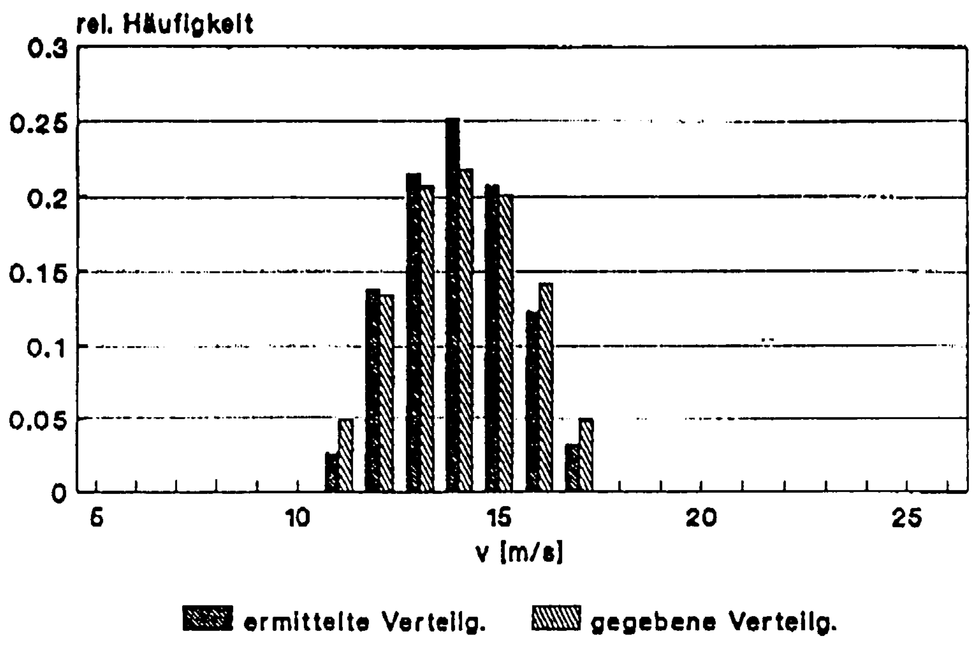
rel. Häufigkeit
0.3
0.25
0.2
0.15
0.1
0.05
0
5
10
15
20
25
v [m/s]
ermittelte Verteilg.
gegebene Verteilg.

Fig. 10

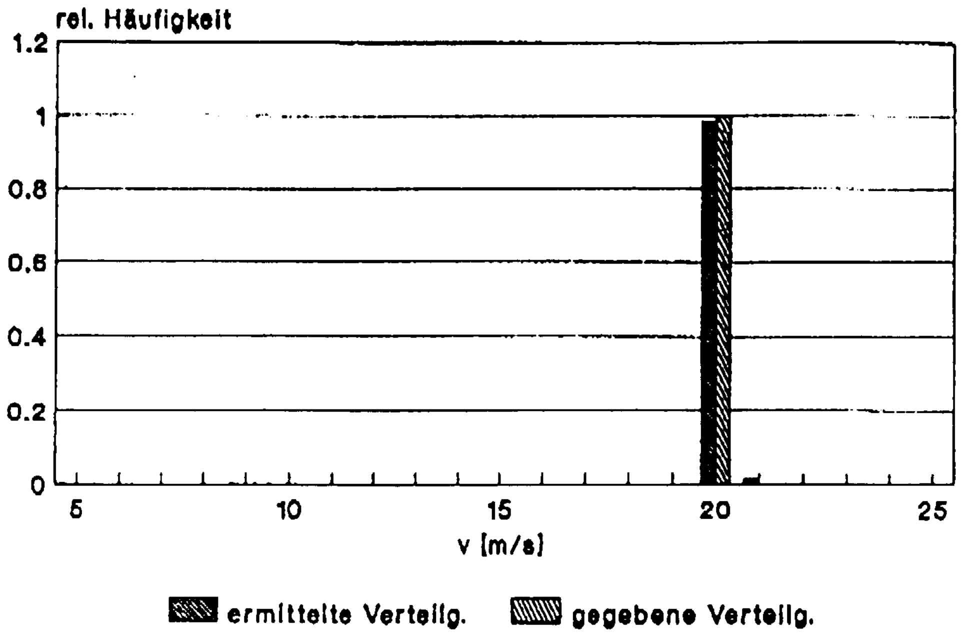
rel. Häufigkeit
1.2
1
0.8
0.6
0.4
0.2
0
5
10
15
20
25
v [m/s]
ermittelte Verteilg.
gegebene Verteilg.

# Fig. 11

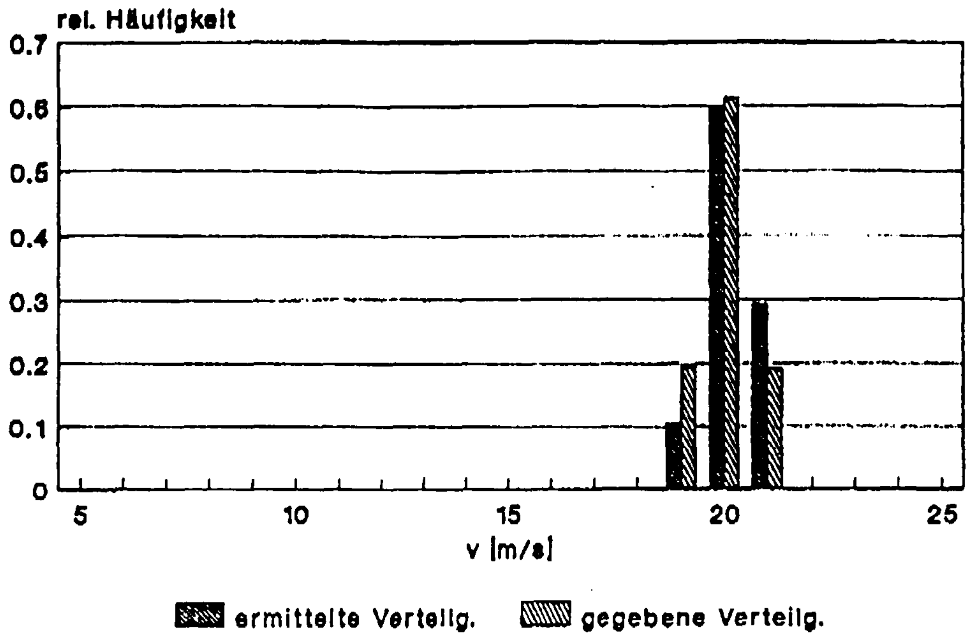
rel. Häufigkeit
0.7
0.6
0.5
0.4
0.3
0.2
0.1
0
5
10
15
20
25
v [m/s]
ermittelte Verteilg.
gegebene Verteilg.

Fig. 12

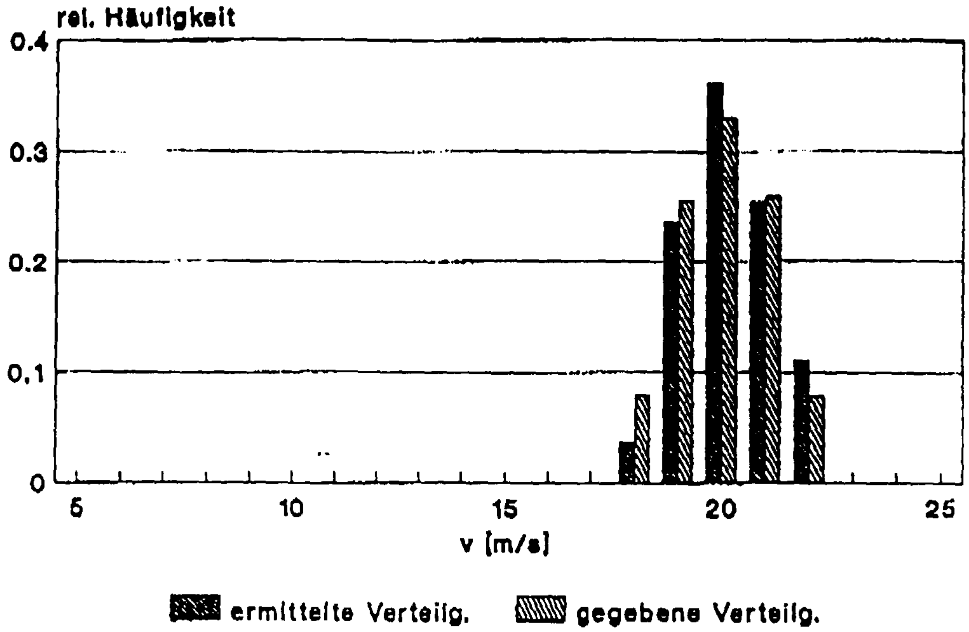
rel. Häufigkeit
0.4
0.3
0.2
0.1
0
5
10
15
20
25
v [m/s]
ermittelte Verteilg.
gegebene Verteilg.

Fig. 13

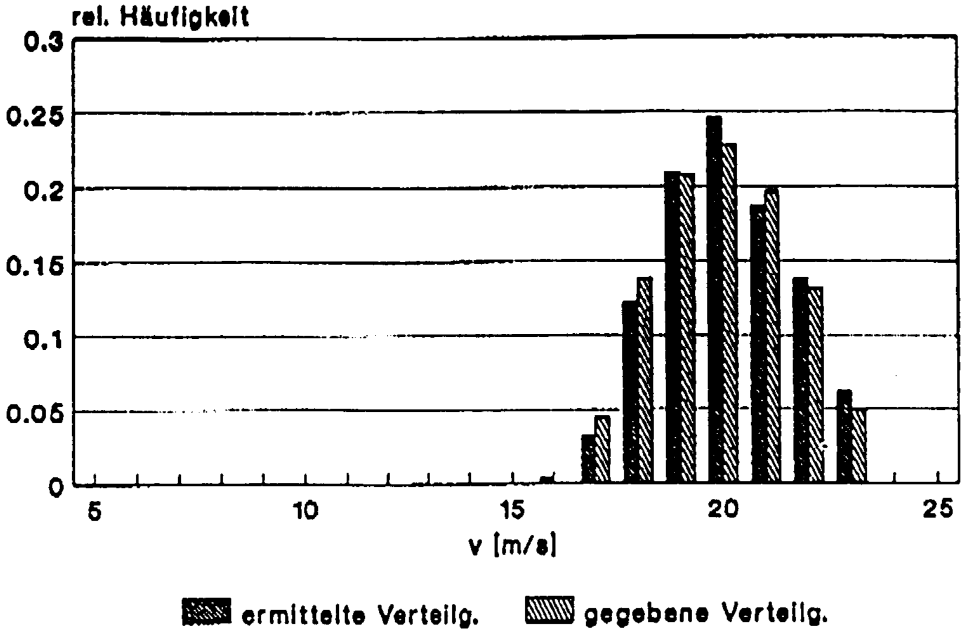
rel. Häufigkeit
0.3
0.25
0.2
0.15
0.1
0.05
0
5
10
15
20
25
v [m/s]
ermittelte Verteilg.
gegebene Verteilg.

Fig. 14

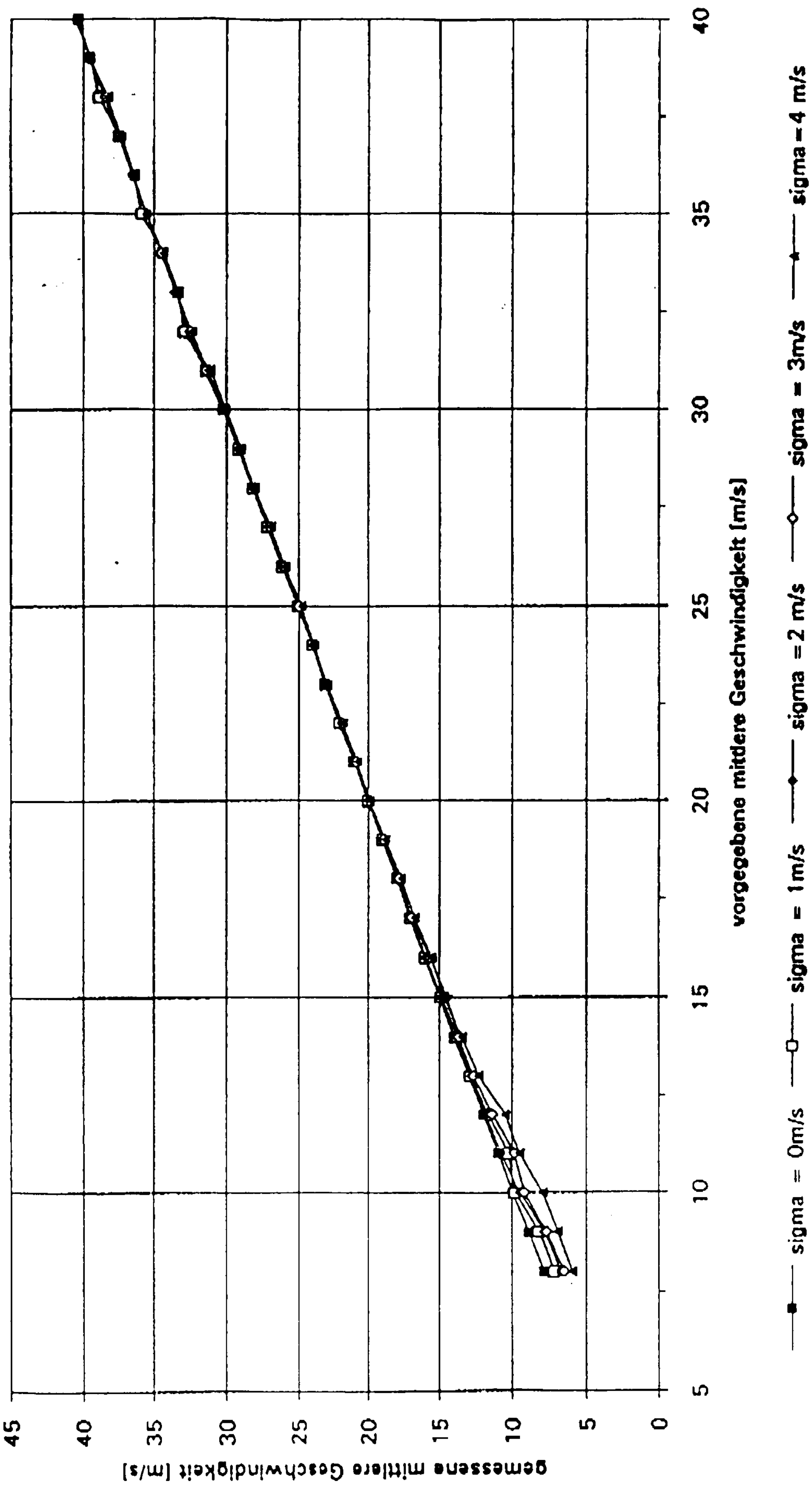
gemessene mittlere Geschwindigkeit [m/s]
0
5
10
15
20
25
30
35
40
45
vorgegebene mittlere Geschwindigkeit [m/s]
5
10
15
20
25
30
35
40
sigma = 0m/s
sigma = 1 m/s
sigma = 2 m/s
sigma = 3m/s
sigma = 4 m/s

Fig. 15

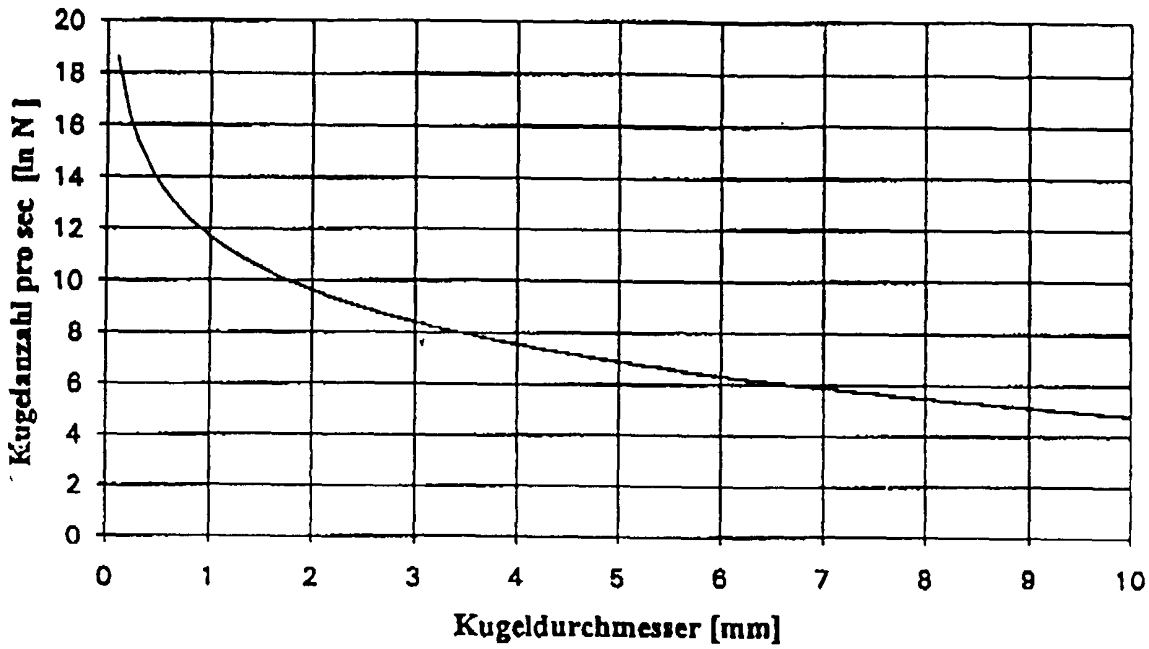
Kugelanzahl pro sec [ln N]
20
18
16
14
12
10
8
6
4
2
0
0
1
2
3
4
5
6
7
8
9
10
Kugeldurchmesser [mm]

Fig. 16

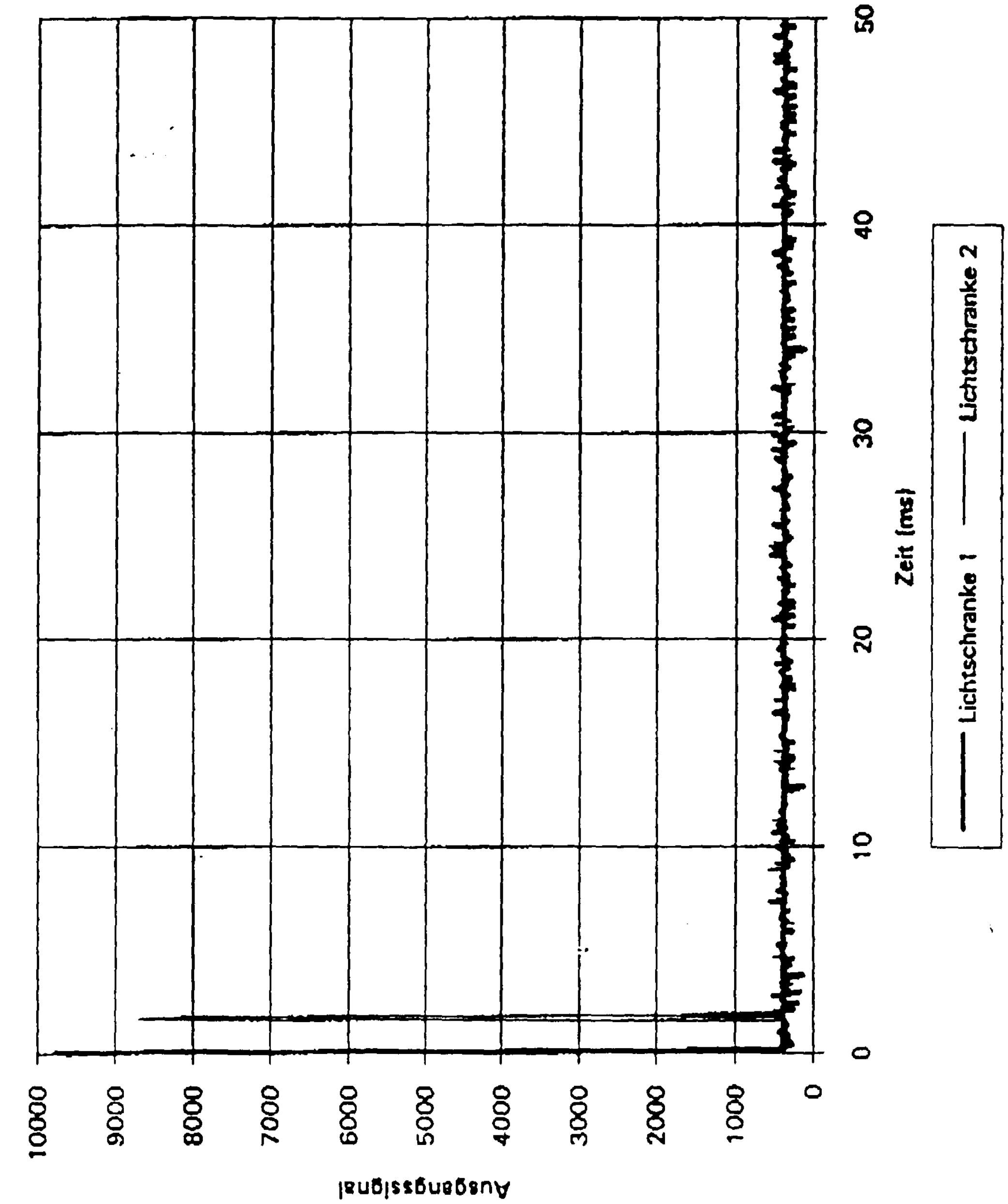
Ausgangssignal
10000
9000
8000
7000
6000
5000
4000
3000
2000
1000
0
0
10
20
30
40
50
Zeit (ms)
Lichtschranke 1
Lichtschranke 2

Fig. 17

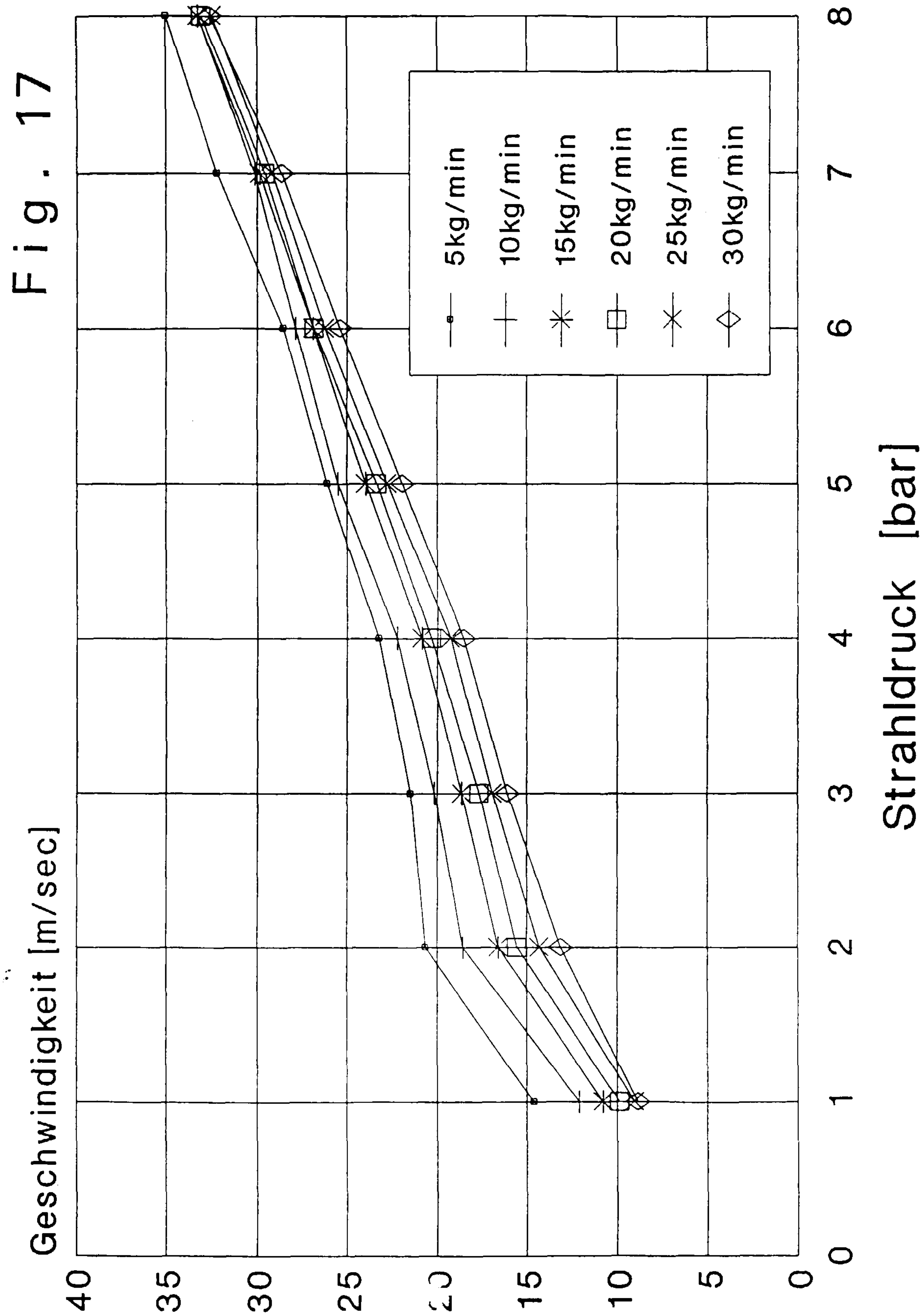
Geschwindigkeit [m/sec]
40
35
30
25
20
15
10
5
0
Strahldruck [bar]
0
1
2
3
4
5
6
7
8
5kg/min
10kg/min
15kg/min
20kg/min
25kg/min
30kg/min